# EUROPEAN PATENT APPLICATION

(11) **EP 3 591 740 A1**
(43) Date of publication of application: **08.01.2020**
(21) Application number: 19183365.6
(22) Date of filing: 28.06.2019
(51) Int. Cl.: H01M 2/26, H01M 10/04, H01M 10/0585, H01M 10/613, H01M 10/647, H01M 2/02

(54) **BATTERY PACK**

(30) Priority: 06.07.2018 JP 2018128864
(71) Applicant: YAZAKI CORPORATION, Minato-ku, Tokyo 108-8333 (JP)
(72) Inventor: KATO, Takuya, Susono-shi,, Shizuoka 410-1194 (JP); SYOUDA, Takahiro, Susono-shi,, Shizuoka 410-1194 (JP)
(74) Representative: Grünecker Patent- und Rechtsanwälte PartG mbB

(57) **Abstract**

A battery pack is provided which enables a reduction of a load on the electrodes which occurs with expansion or contraction of the batteries. Multiple batteries (21-26) have electrode tabs (202) protruding from both ends, and are stacked in a stacking direction (D1) orthogonal to a protrusion direction (D2) of the electrode tabs (202). Busbar modules (41, 42) are jointed to the electrode tabs (202) and comprise busbars (402) for connecting the batteries (21-26). An aluminum plate (5) is arranged between batteries (23, 24) of the multiple batteries (21-26) which are adjacent to a center. This aluminum plate (5) and the busbar modules (41, 42) are fixed.

## Description

### BACKGROUND OF THE INVENTION

### Technical Field

The present invention relates to a battery pack.

### Background Art

As the above mentioned battery pack, a battery module according to Patent Literature 1 is proposed. The above mentioned battery module 10 includes, as shown in Fig.4, multiple batteries 111-116 stacked on each other, end plates 121, 122 arranged above and below the multiple batteries 111-116 and busbar modules 131, 132 for connecting the multiple batteries 111-116 in series.

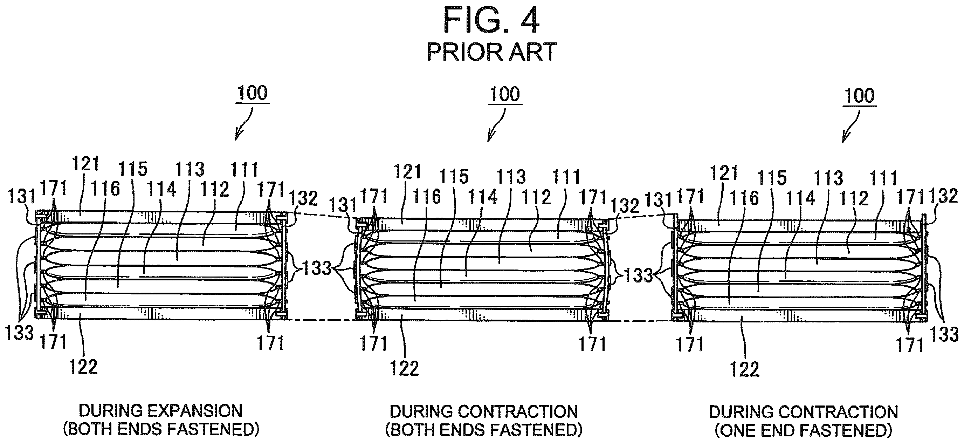

Electrode tabs 171 protrude from ends of the batteries 111-116. With regard to the busbar modules 131, 132, multiple busbars 133 and slits arranged above and below the busbars 133 (not shown) are provided. The multiple batteries 111-116 are connected in series by inserting the electrode tabs 171 into the slits of these busbar modules 131, 132 and jointing the electrode tabs 171 with the busbars 133. The above mentioned busbar modules 131, 132 are, as shown in the leftmost and middle parts of Fig.4, fastened and fixed to the end plates 121, 122 arranged above and below the batteries 111-116.

The above mentioned batteries 111-116 expands and contracts with charging and discharging. There has been the problem that the busbar modules 131, 132 are deformed with such expansion or contraction, which causes a load on the electrode tabs 171 wherein a fatigue fracture of the electrode tab 171 and/or separation of the joint may occur by repeatedly applying stress. There has been also the risk that the busbar modules 131, 132 may be also damaged by their deforming.

Therefore, as shown in the rightmost part of Fig.4, it would be conceivable to fasten the busbar module 131, 132 on only one of the end plates 121, 122 arranged above and below so as to limit the deformation of the busbar modules 131, 132. However, even in this case, a large position offset may occur with the expansion or contraction between the electrode tabs 171 of the batteries 111 on the side which is not fastened (top side in the figure) and slits of the busbar modules 131, 132. In more details, under the assumption that for example a variation of ± 2 mm occurs at the multiple batteries 111-116 as a whole with expansion or contraction, a position offset of maximal 4 mm will occur between the electrode tabs 171 of the batteries 111 on the side which is not fastened and the slits of the busbar modules 131, 132. Therefore, there is the problem that this results in a load on the electrode tabs 171, which causes a fatigue fracture of the electrode tab 171 and/or separation of the joint may occur by repeatedly applying stress.

### Citation List

### Patent Literature

Patent Literature 1: JP 2013-229266 A1

### SUMMARY OF THE INVENTION

The present invention is provided in view of the above background and aimed at providing a battery pack which enables a reduction of load on the electrodes caused by expansion and/or contraction of the batteries.

A battery pack according to embodiments of the present invention is characterized in that it includes multiple batteries with electrodes protruding from both respective ends, a substrate with insertion holes formed therein, and a fixing plate arranged between two of the multiple batteries which are adjacent to each other, wherein the multiple batteries are stacked in a direction orthogonal to a protrusion direction of the electrodes, wherein the electrodes protruding from the both respective ends of the multiple batteries are inserted into the insertion holes, and wherein the fixing plate and the substrate are fixed to each other.

Furthermore, the fixing plate may be formed from aluminum.

Moreover, the fixing plate may be arranged between two of the multiple batteries which are adjacent to a center.

With the embodiments described above, a load on the electrodes which occurs with expansion or contraction of the batteries can be reduced.

### BRIEF DESCRIPTION OF THE DRAWINGS

Fig. 1 is an exploded perspective view showing one embodiment of a battery module as a battery pack according to the present invention;
Fig. 2 is a schematic side view of batteries of the battery module according to Fig.1 during expansion and contraction;
Fig. 3 is a schematic side view with sectioning a part of a battery module showing another embodiment; and
Fig. 4 is a side view for illustrating a problem of a battery module of the conventional art.

### DETAILED DESCRIPTION OF THE PREFERRED EMBODIMENTS

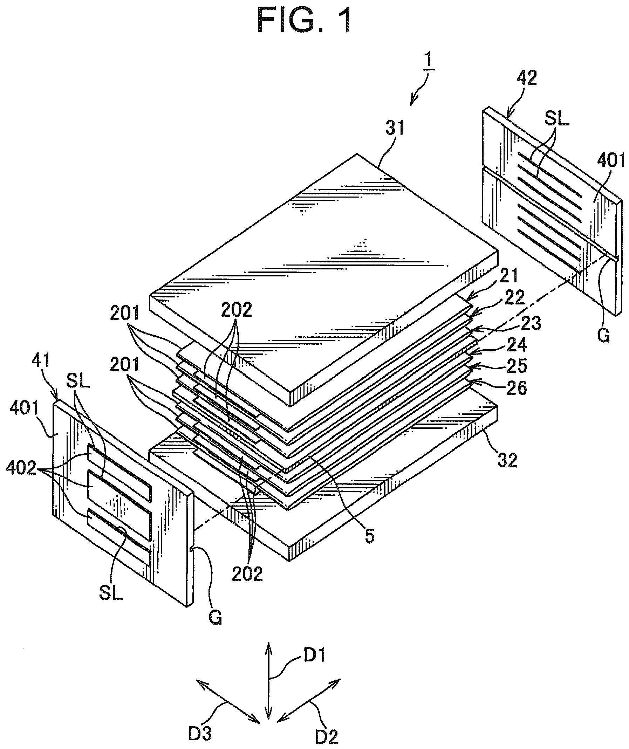

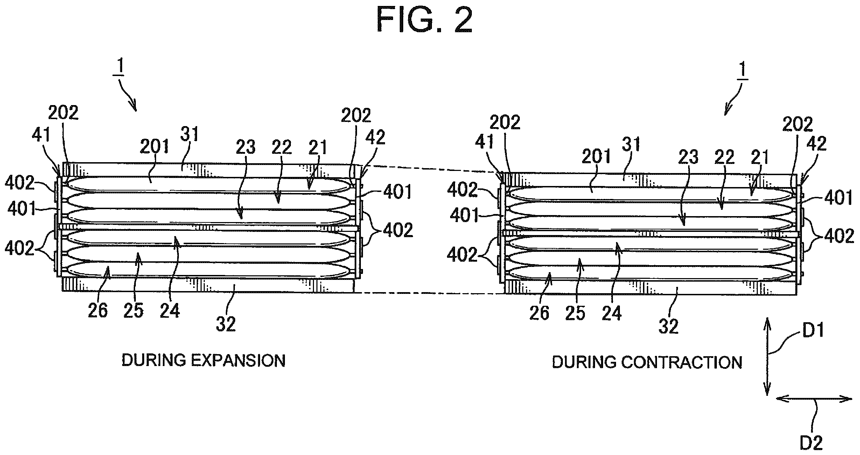

Now, one embodiment according to the present invention shall be explained below based on Figs. 1 and 2. As shown in these Figures, a battery module 1 includes multiple stacked batteries 21-26, a pair of end plates 31, 32 positioned on both sides in a stacking direction D1 of the multiple batteries 21-26, a pair of busbar modules 41, 42 for connecting the multiple batteries 21-26 in series, and one aluminum plate 5 (fixing plate).

Each of the multiple batteries 21-26 is formed e.g. from a laminated battery which consists of a lithium secondary battery, wherein it is a flat battery with a small thickness in the stacking direction D1. The multiple batteries 21-26 include battery bodies 201 which are rectangular when seen from one side in the stacking direction D1, and pairs of ribbon-shaped electrode tabs 202, 202 (electrodes). The pairs of electrode tabs 202, 202 protrude from the respective centers of both ends of the battery bodies 201 which form their short sides. As a result, a protrusion direction D2 of the electrode tabs 202, 202 is orthogonal to the stacking direction D1.

Furthermore, one of the pair of electrode tabs 202, 202 described above forms a positive electrode of a battery 21-26 while the other forms a negative electrode of the battery 21-26. The multiple batteries 21-26 are stacked in alternating orientations so that the electrode tabs 202 forming positive electrodes are alternating with the electrode tabs 202 forming negative electrodes. Additionally, the multiple batteries 21-26 are connected in series by using busbars 402 as described below to connect the electrode tabs 202 forming positive electrodes to the electrode tabs 202 forming negative electrodes which are adjacent.

The pair of end plates 31, 32 is rectangular plate-like elements made of hard plastic or metallic material (iron, aluminum, stainless steel etc.) and arranged on both sides of the multiple batteries 21-26 in the stacking direction D1. As a consequence, the multiple batteries 21-26 are arranged with their both sides in the stacking direction D1 disposed between this pair of end plates 31, 32. Furthermore, the pair of end plates 31, 32 is arranged vertically to the stacking direction D1.

The pair of busbar modules 41, 42 is each formed in a plate-shape and arranged on both sides of the multiple batteries 21-26 in the protrusion direction D2. As a consequence, the multiple batteries 21-26 are arranged with their both sides in the protrusion direction D2 disposed between this pair of busbar modules 41, 42. Furthermore, the pair of busbar modules 41, 42 is arranged vertically to the protrusion direction D2.

Furthermore, the pair of busbar modules 41, 42 each includes a substrate 401 and busbars 402 supported thereon. The substrates 401 consist of plastic etc. and are formed in a rectangular shape when seen in the protrusion direction D2. The busbars 402 consist of metallic material such as copper or brass etc. and the electrode tabs 202 are jointed using welding or soldering etc. Said busbars 402 are exposed and supported on outer surfaces of the substrates 401, i.e. on their surfaces opposed to the batteries 21-26. While according to the present embodiment, the busbars 402 are molded in one-pieces during producing the substrates 401, it may be also provided that the busbars 402 are attached with any means after producing the substrates 401.

Moreover, the busbars 402 are formed in a linear shape which is elongate along a orthogonal direction D3 orthogonal to the stacking direction D1 as well as the protrusion direction D2, wherein a plurality of the busbars 402 are arranged adjacent to each other in the stacking direction D1. The number of the busbars 402 corresponds to that of combinations of positive and negative electrode tabs 202 which should be connected to each other. According to the present embodiment, three busbars 402 are provided in a busbar module 41 on the one side in the protrusion direction D2 (the left side in Fig.2) while two busbars 402 are provided in a busbar module 42 on the other side in the protrusion direction D2 (the right side in Fig.2).

Furthermore, slits SL (Fig.1) as six insertion holes for inserting said electrode tabs 202 therethrough are formed in the substrates 401, arranged adjacent to each other in the stacking direction D1. The slits SL are formed in a linear form which is elongate along the orthogonal direction D3. In the busbar module 41, the six slits SL are formed along both end edges of the three busbars 402 in the stacking direction D1. The electrode tabs 202 inserted into the six respective slits SL of the busbar module 41 protrude over the both end edges of the busbars 402 in the stacking direction D1, wherein the electrode tabs 202 are jointed to the busbars 402 after being bent along surfaces of the busbars 402.

In the busbar module 42, four middle slits SL are formed along both end edges of two busbars 402 in the stacking direction D1. The electrode tabs 202 inserted into the four respective central slits SL in the busbar module 42 protrude over the both end edges of the busbars 402 in the stacking direction D1, wherein the electrode tabs 202 are jointed to the busbars 402 after being bent along surfaces of the busbars 402. The electrode tabs 202 inserted into two respective slits SL on both ends in the busbar module 42 protrude over the substrate 401 and form electrodes of the battery module 1.

Furthermore, a groove G is formed nearly at a center of the substrate 401 in the stacking direction D1 for inserting both ends of an aluminum plate 5 as described below into the groove G. The groove G is formed along the orthogonal direction D3.

The aluminum plate 5 is configured in a plate-shape with an essentially same size and a same thickness as the battery body 201. The aluminum plate 5 is arranged between two batteries 23, 24 which are adjacent to a center of the multiple batteries 21-26. The aluminum plate 5 is fixed in the stacking direction D1 to the batteries 21-26 by being sandwiched between the two batteries 23, 24.

Moreover, both ends of the aluminum plate 5 in the protrusion direction D2 are fitted into the grooves G of the busbar modules 41, 42. As a consequence, the aluminum plate 5 and the busbar modules 41, 42 are fixed. Here, the busbar modules 41, 42 are not fixed to the end plates 31, 32.

Here, the wording "two of the multiple batteries 21-26 which are adjacent to a center" means two batteries 23, 24 where the number of batteries 21-23 on the one side of the aluminum plate 5 in the stacking direction D1 (upper side in Fig.2) is equal to that of batteries 24-26 on the other side (lower side in Fig.2) if the number of the multiple batteries 21-26 is six (i.e. an even number) as shown in the present embodiment.

On the other side, it means a battery 23 at the center in the stacking direction D1 and an adjacent battery 22 on the one side of this central battery 23 in the stacking direction D1 or an adjacent battery 24 on the other side in the stacking direction D1 if the number of the multiple batteries 21-25 is less by one than in the present invention, i.e. five (namely an odd number).

According to the battery module 1 described above, the aluminum plate 5 is arranged between two batteries 23, 24 of the multiple batteries 21-26 which are adjacent to the center, wherein the aluminum plate 5 and the busbar modules 41 and 42 are fixed. As a result, since aluminum plate 5 and the busbar modules 41, 42 are fixed, no load may be applied on the electrode tabs 202, as the busbar modules 41, 42 move together with the batteries 21-26 even in case of oscillation of a vehicle. Furthermore, since the busbar modules 41, 42 are not fixed to the end plates 31, 32, the busbar modules 41, 42 may not be deformed even in case that the batteries 21-26 expand or contract and their size in the stacking direction D1 varies.

Moreover, since a position offset of the slits SL of the busbar modules 41, 42 from the electrode tabs 202 occurs around the aluminum plate 5 as a center, a reduction of the position offset can be achieved by half compared with the one-side fastening of the conventional art according to Fig.4. To explain more concretely, under the assumption that for example a variation of ± 2 mm occurs at the multiple batteries 21-26 as a whole with expansion or contraction, a position offset of maximal 4 mm will occur between the electrode tabs 202 of the battery 21 on the side which is not fastened and the slits SL of the busbar modules 41, 42. In contrast, according to the present embodiment, a position offset of the electrode tabs 202 of batteries 21, 26 on both ends in the stacking direction D1 from the slits SL of the busbar modules 41, 42 will be half, i.e. 2mm, so that a load on the electrode tabs 202 can be reduced which is accompanied by expansion or contraction of the batteries 21-26.

Furthermore, according to the above described embodiment, the aluminum plate 5 made of aluminum was used as the fixing plate. This can obtain a cooling effect of the batteries 21-26.

Moreover, the aluminum plate 5 according to the above described embodiment is arranged between two batteries 23, 24 of the multiple batteries 21-26 which are adjacent to the center. This does not enable only the position offset to be half as described above, but also more cooling effect by inserting the aluminum plate 5 into the center with a higher temperature.

It is to be noted that, while the fixing plate according to the above described embodiment consists of the aluminum plate 5, it is not limited thereto. As the fixing plate, any element is possible which can be arranged between two batteries 23, 24 to fix busbar modules 41, 42, and it may be also formed from plastic etc.

Furthermore, while according to the above described embodiment, the aluminum plate 5 is arranged between two batteries 23, 24 of the multiple batteries 21-26 which are adjacent to the center, the present invention is not limited to this. For the aluminum plate 5, it is only required that it is arranged between any two of the multiple batteries 21-26 which are adjacent to each other, it may also be arranged for example between the batteries 21 and 22. Also in this case, under the assumption that for example a variation of ± 2 mm occurs at the multiple batteries 21-26 as a whole with expansion or contraction, a position offset of an electrode tab 202 at one end of the battery 21 in the stacking direction D1 from the slit SL of the busbar module 41, 42 will be smaller than 4mm, a load on the electrode tab 202 can be reduced.

Moreover, while the busbar modules 41, 42 according to the above described embodiment, are not fixed to the end plates 31, 32, the present invention is not limited to this. If the substrates 401 of the busbar modules 41, 42 consist of elastic elements such as rubber to provide a contracting function, the busbar modules 41, 42 may also be fastened to the end plates 31, 32.

Furthermore, although the aluminum plate 5 according to the above described embodiment was fitted into the grooves G of the busbar modules 41, 42 to be fixed so that it may not be moved in the stacking direction D1, the present invention is not limited to this. It is also possible that tabs to be arranged above or below the busbar modules 41, 42 are provided at the aluminum plate 5 and fixed by fastening with screws.

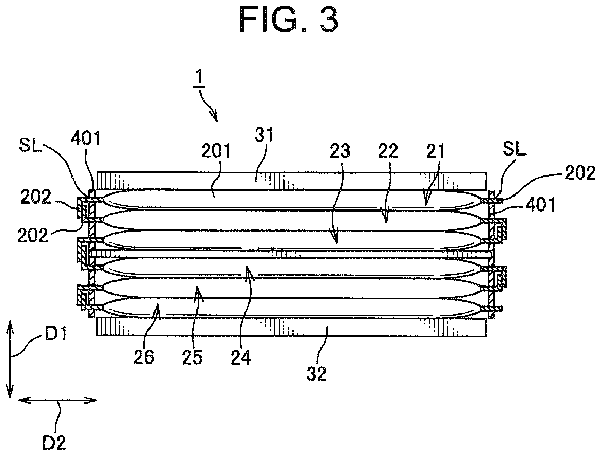

Moreover, although according to the above described embodiment, the busbars 402 supported on the substrates 401 were used to connect the electrode tabs 202 of the batteries 21-26, the present invention is not limited to this. According to the present invention, only substrates 401 into which the electrode tabs 202 are to be inserted may be needed in order to connect the multiple batteries 21-26 in series by connecting the electrode tabs 202 of the batteries 21-26 to each other which are adjacent to each other, and for example, the electrode tabs 202 may be welded with each other without busbars 402, as shown in Fig.3.

It is to be noted that the present invention is not limited to the above described embodiments. That means that various modifications can be implemented without departing from the core of the present invention.

### Reference Signs List

- 1: Battery module (battery pack)
- 5: Aluminum plate (fixing plate)
- 21-26: Battery
- 401: Substrate
- 202: Electrode tab (electrode)
- 402: Busbar
- D2: Protrusion direction
- SL: Slit (Insertion hole)

## Claims

1. A battery pack comprising:
multiple batteries provided with electrodes protruding from each of both ends in a protrusion direction and stacked in a direction orthogonal to the protrusion direction of the electrodes;
a substrate with insertion holes formed therein allowing the electrodes protruding from each of the both ends of the multiple batteries to be inserted therein; and
a fixing plate sandwiched between any two of the multiple batteries which are adjacent to each other,
wherein the fixing plate and the substrate are fixed to each other.

2. The battery pack according to claim 1, wherein the fixing plate is formed from aluminum.

3. The battery pack according to claim 1 or 2, wherein the fixing plate is sandwiched between two of the multiple batteries which are adjacent to a center of the multiple batteries.
